# EUROPÄISCHE PATENTANMELDUNG

(11) **EP 0 566 776 A2**
(43) Veröffentlichungstag der Anmeldung: **27.10.1993**
(21) Anmeldenummer: 92115026.4
(22) Anmeldetag: 03.09.1992
(51) Int. Cl.: B01D 36/00, C08G 77/34

(54) **Verfahren und Anordnung zur Reinigung von Öl**

(30) Priorität: 18.04.1992 DE 4212972
(71) Anmelder: Daimler-Benz Aerospace Aktiengesellschaft, D-81663 München (DE)
(72) Erfinder: Bilgery, Walter, Dipl.-Ing., W-7900 Ulm (DE)
(74) Vertreter: Schulze, Harald Rudolf, Dipl.-Ing.

(57) **Zusammenfassung**

Die Erfindung betrifft ein Verfahren und eine Anordnung zur Reinigung von Öl, insbesonder von Siliconöl, das als Kühl- und/oder Isolationsmittel in Hochspannungsgeräten, insbesondere für Radaranlagen, verwendbar ist. Dabei wird das öl in einem geschlossenen evakuierbarem Kreislaufsystem gereinigt. An dieses sind auch Geräte, z.B. die Hochspannungsgeräte, ankoppelbar, so daß diese gereinigt und mit gereinigtem gas- und waserarmen Öl, das außerdem eine genau vorherbestimmbare elektrische Durchschlagsfestigkeit besitzt, gefüllt werden können.

## Beschreibung

Die Erfindung betrifft ein Verfahren und eine Anordnung zur Reinigung von Öl nach den Oberbegriffen der Patentansprüche 1 und 6.

Die Erfindung ist insbesondere anwendbar zur Reinigung von Öl, das zur Kühlung und/oder elektrischen Isolation in Hochspannungsgeräten, insbesondere Hochspannungsgeräte für Radaranlagen, verwendet wird. Solche Hochspannungsgeräte erzeugen beispielsweise eine Hochspannung von ungefähr 20 kV. Das in solchen Geräten verwendete Öl, z.B. ein Siliconöl mit einer dynamischen Viskosität von ungefähr 18,5 mPa·s (bei einer Temperatur von 25°C) und einer kinematischen Viskosität von ungefähr 15 cSt (bei einer Temperatur von 25°C), dient einerseits zur Kühlung des Gerätes, das heißt zur Abführung der in dem Gerät entstehenden Verlustwärme, und andererseits zur elektrischen Isolation, das heißt zur Isolation der innerhalb des Gerätes befindlichen Bauelemente. Es sollen insbesondere störende elektrische Entladungen, sogenannte Überschläge, vermieden werden. Das für solche Anwendungen besonders gut geeignete Siliconöl besitzt in einem gas- und wasserfreiem Zustand eine ausreichend hohe elektrische Durchschlagsfestigkeit, z.B. größer als 50 kV/2,5 mm. Ein störender Nachteil des Siliconöls besteht jedoch darin, daß dieses organische und anorganische Stoffe, insbesondere Wasser und Gase, z.B. Luft, bindet (physikalisch und/oder chemisch löst) in einem Maße, daß die Durchschlagfestigkeit einen so niedrigen Wert erreicht, der in störender Weise keine ausreichende elektrische Isolation mehr gewährleistet. Eine derart verringerte Durchschlagsfestigkeit verringert in nachteiliger Weise die Zuverlässigkeit der Geräte oder kann sogar zu deren Zerstörung führen.

Zur Vermeidung eines solchen Nachteils ist es naheliegend, die Geräte in regelmäßigen Zeitabständen mit ungebrauchtem neuem Siliconöl zu füllen. Selbst eine solche regelmäßige Wartung der Geräte gewährleistet jedoch nicht deren zuverlässige Funktion, da bereits während des Transportes und/oder des Umfüllvorgangs des Siliconöles in diesem störende Gas- und/oder Wassermengen gebunden werden können.

Der Erfindung liegt daher die Aufgabe zugrunde, ein gattungsgemäßes Verfahren und eine gattungsgemäße Anordnung anzugeben, mit denen sowohl neues als auch gebrauchtes Öl, insbesondere Siliconöl, derart gereinigt werden kann, daß eine möglichst hohe elektrische Durchschlagsfestigkeit erreicht wird und daß diese auch während des Füllvorganges des Gerätes, insbesondere eines Hochspannungsgerätes für eine Radaranlage, erhalten bleibt.

Diese Aufgabe wird gelöst durch die in den kennzeichnenden Teilen der Patentansprüche 1 und 6 angegebenen Merkmale. Vorteilhafte Ausgestaltungen und/oder Weiterbildungen sind den Unteransprüchen entnehmbar.

Ein erster Vorteil der Erfindung besteht darin, daß ein zu füllendes Gerät, insbesondere ein Kochspannungsgerät für eine Radaranlage, vor dem Füllen mit durchschlagsfestem Siliconöl so gereinigt werden kann, daß in dem Gerät befindliche störende Gas- und/oder Wasserreste entfernt werden.

Ein zweiter Vorteil besteht darin, daß nach einem einmaligen Anschluß eines mit Öl gefüllten Gerätes an das Kreislaufsystem eine Entleerung, eine anschließende Reinigung und eine anschließende Neufüllung des Gerätes mit gereinigtem Öl möglich ist.

Ein dritter Vorteil besteht darin, daß eine wesentliche größere Ölmenge als diejenige, die zur Füllung eines Gerätes benötigt wird, gereinigt und bevorratet werden kann. Es ist dann möglich, diesen Vorrat an gereinigtem Öl nacheinander in mehrere Geräte abzufüllen.

Die Erfindung beruht auf der Erkenntnis, daß aus dem beispielhaft erwähnten Siliconöl lediglich die physikalisch gebundenen Gas- und/oder Wasseranteile entfernt werden müssen, um eine ausreichend hohe elektrische Durchschlagsfestigkeit zu erreichen.

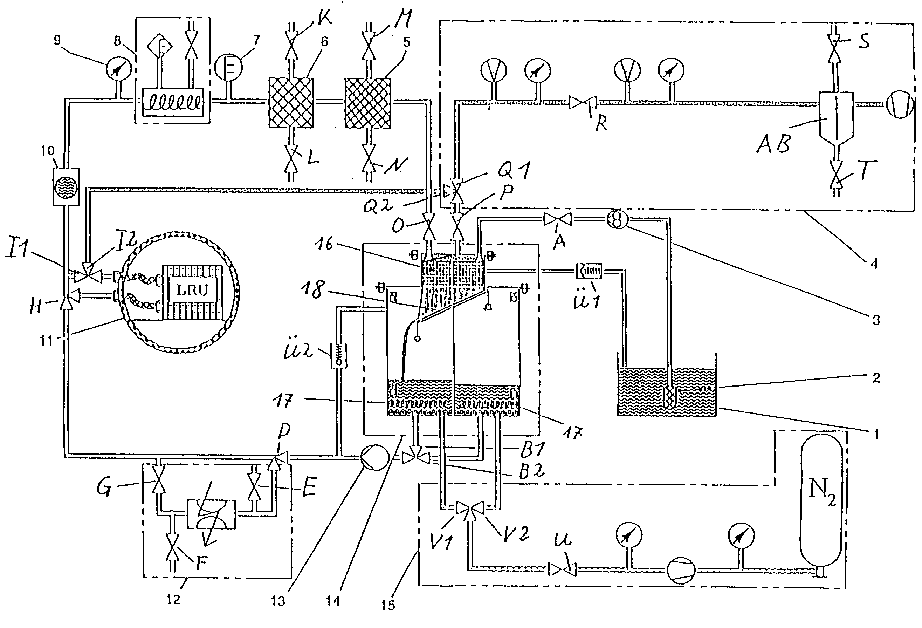

Die Erfindung wird im folgenden anhand eines Ausführungsbeispiels näher erläutert, das als prinzipielles Blockbild in der Figur dargestellt ist.

Die nachfolgend erläuterte Anordnung wird beschrieben für den beispielhaft gewählten Anwendungsfall, daß das zu reinigende Öl, vorzugsweise das eingangs erwähnte Siliconöl, in nahezu beliebigen Transportbehältern angeliefert wird. Dieses neue und/oder gebrauchte Öl, dessen Anlieferung z.B. in ungefähr 20 l fassenden Transportbehältern erfolgt, wird zunächst in einem Vorratsbehälter 1 gesammelt, der z.B. ein Fassungsvermögen von ungefähr 150 l hat und der optional auch abseits der nachfolgend beschriebenen Anordnung stehen kann. Wenn ein vorgebbarer Füllstand erreicht und/oder überschritten ist, wird das im Vorratsbehälter 1 befindliche Öl abgepumpt mit Hilfe einer Membranpumpe 3, die an ihrem Ansaugstutzen ein Grobfilter 2 besitzt, damit keine groben Verschmutzungen, z.B. Sandkörner, angesaugt werden. Das Öl wird dabei über das geöffnete Ventil A, eine Anordnung 16 zur Vergrößerung der Oberfläche des Öls, z.B. ein mit sogenannten Raschig-Ringen gefüllter Behälter, und eine Schaltvorrichtung 18, vorzugsweise eine mechanische Schaltwippe, in den linken Teil des zweigeteilten Vorratstanks 14 gepumpt. Das Überdruckventil Ü1 verhindert einen unzulässig hohen Druck bei diesem Pumpvorgang. Es ist wichtig, daß vor dem Beginn dieses Pumpvorganges zumindest der Vorratstank 14 evakuiert, z.B. auf einen Druck kleiner 2·10⁻³ mbar, und daß während des Pumpvorganges ein verringerter Druck, z.B. 2·10⁻³ mbar, aufrecht erhalten wird. Denn dadurch wird einerseits vermieden, daß das Öl bei der Oberflächenvergrößerung an den Raschig-Ringen zusätzlich störende Gasmengen und/oder Wassermengen (Luftfeuchtigkeit) aufnimmt, und andererseits erfolgt bereits jetzt eine Entgasung und/oder Entwässerung des Öls. In dem Vorratstank 14 wird der verminderte Druck erzeugt durch eine Vakuumanordnung 4, die über eine Verbindungsleitung und geöffnete Ventile R, Q1, P mit der Anordnung 16 (Vorratstank 14) verbunden ist. Wenn in dem Vorratstank 14 eine Mindestmenge Öl vorhanden ist derart, daß die am Boden des Vorratstanks 14 angeordnete Heizung 17 von Öl bedeckt ist, wird die Heizung 17 eingeschaltet, z.B. über einen entsprechenden Füllstandssensor, und das Öl erwärmt, z.B. auf eine Temperatur von ungefähr 90°C. Außerdem wird trockenes inertes Gas, z.B. N₂, über Düsen durch das erwärmte Öl geleitet. Dadurch wird dem Öl das störende Wasser entzogen. Das oberhalb des Öls entstandene Gas-Wasserdampf-Gemisch wird über die Vakuumanordnung abgesaugt und in einem Abschneider AB abgeschieden. Als inertes Gas wird vorteilhafterweise trockener molekulaver gasförmiger Stickstoff N₂ verwendet, der in kostengünstiger Weise in einer Gasversorgungseinheit 15 aus flüssigem Stickstoff hergestellt wird. Das inerte Gas gelangt über Ventile U, V1 und Verbindungsleitungen in den beispielhaft gewählten linken Teil des Vorratstanks 14. Alternativ dazu ist es auch möglich, weitere inerte Gase, z.B. Wasserstoff oder ein Edelgas, z.B. Helium oder Argon, oder ein Gemisch aus diesen Gasen, zu verwenden. Diese können in weiteren Gasversorgungseinheiten hergestellt und über entsprechend geschaltete Ventile in den Vorratstank 14 geleitet werden. Ist der Füllvorgang beendet, so wird das Ventil A geschlossen, die Zahnradpumpe 3 abgeschaltet, die Schaltvorrichtung 18 umgeschaltet, so daß Öl nur in den rechten Teil des Vorratstanks 14 fließen kann, und die Anordnung auf Umwälzbetrieb einstellt. Dabei wird das Öl durch eine Dosierpumpe 13 umgewälzt, z.B. mit einer Pumpleistung von 150 l/h für eine Dauer von ungefähr 8 Stunden, und zwar von dem linken Teil des Vorratstanks 14 über ein geöffnetes Ventil B1, die Dosierpumpe 13, geöffnete Ventile D, H, ein Schauglas 10, eine Durchlaufheizung 8, ein (Grob-)Filter 6 mit einer Porengröße von 10 µm, ein (Fein-)Filter 5 mit einer Porengröße von 0,5 µm, ein geöffnetes Ventil O, die Anordnung 16 zur Vergrößerung der Öl-Oberfläche und die Schaltanordnung 18 in den rechten Teil des Vorratstanks 14. Dieses ist ein geschlossenes Kreislaufsystem, in welchem die Vakuumanordnung 4 ständig einen verminderten Druck, z.B. 2·10⁻³ mbar, erzeugt. Die Durchlaufheizung 8 hält das Öl konstant auf einer Temperatur von 90°C, um in der Anordnung 16 an den erwähnten Raschig-Ringen (torusförmige Körper aus Keramik) ein möglichst großen Wasseranteil zur Verdunstung zu bringen. Dort werden auch die vorwiegend physikalisch gebundenen Gasreste aus dem Öl abgesaugt. In den Filtern 6,5 werden in dem Öl vorhandene Verunreinigungen entfernt. Dabei ist neben einer Filterung über passive Filter, z.B. Keramikfilter, mit den erwähnten Porengrößen zusätzlich eine Filterung über aktive Filter, z.B. ein Aktivkohle-Filter, möglich. Mit letzterem können dem Öl sogar störende chemisch gebundene Bestandteile entzogen werden. Ist der rechte Teil des Vorratstanks 14 gefüllt (leerer linker Teil), so wird das Ventil B1 geschlossen, das Ventil B2 geöffnet, die Schaltvorrichtung 18 umgeschaltet. Es erfolgt eine Umwälzung von dem gefüllten rechten Teil in den leeren linken Teil des Vorratstanks 14.

Während dieser Umwälzung wird die elektrische Durchschlagsfestigkeit gemessen. Dazu wird nach Ablauf einstellbarer Zeitintervalle, z.B. jeweils nach einer halben Stunde, das in dem Durchschlagprüfgerät 12 befindliche Ventil G kurzzeitig, z.B. für eine Minute, geöffnet. Das Öl durchströmt dabei über die Ventile D, G eine Meßanordnung (gezackter Pfeil), in welcher die elektrische Durchschlagfestigkeit bestimmt wird. Überschreitet diese einen vorgebbaren Schwellwert, z.B. 50 kV/2,5 mm, so wird die Umwälzung beendet, da das Öl als gereinigt angesehen wird. Das Öl besitzt nun einen Gasgehalt kleiner 1 % sowie einen Wassergehalt kleiner 5 ppm (parts per million).

Das beschriebene Kreislaufsystem besitzt an den Ventilen H, I1 eine Anschlußmöglichkeit für ein mit Öl zu füllen und/oder zu entsorgendes Gerät LRU, z.B. ein Hochspannungsgerät für eine Radaranlage. Das Gerät LRU befindet sich in einem Ofen 11, der auf eine vorgebbare Temperatur, z.B. 90°C, aufheizbar ist.

Befindet sich in dem Gerät LRU kein Öl, so werden die Ventile H, I1 zunächst so geschaltet, daß das Gerät LRU zunächst nicht von dem im Kreislaufsystem befindlichen Öl durchströmt wird. Es erfolgt zunächst eine Entgasung und/oder Entwässerung des Gerätes LRU. Dazu wird dieses für einige Zeit, z.B. eine Stunde, in erwärmten Zustand, z.B. 90°C, über eine Verbindungsleitung und die geöffneten Ventile I2, Q2, Q1 an die Vakuumanordnung 4 angeschlossen. Nach Schließung der Ventile I2, Q2 wird das Gerät LRU durch entsprechendes Schalten der Ventile H, I1 an das Kreislaufsystem angekoppelt. Das Öl durchströmt nun das Gerät LRU und reinigt dieses dabei, z.B. von störendem ungereinigten (Rest-)Öl. Dieses befindet sich dann in dem Kreislaufsystem und kann durch den beschriebenen Umwälzvorgang ebenfalls gereinigt werden. Nach diesem Reinigungsvorgang ist das Gerät LRU mit gereinigten Öl, das durch das Durchschlagprüfgerät 12 kontrolliert wurde, gefüllt und kann von dem Kreislaufsystem abgekoppelt werden.

Es ist ersichtlich, daß auch ein mit ungereinigtem Öl gefülltes Gerät LKU angekoppelt werden kann. In diesem Fall kann die Entgasung und/oder Entwässerung über die Ventile I2, Q2 entfallen. Das im Kreislaufsystem befindliche Öl durchströmt nun sofort das Gerät LRU. Es wird gereinigt, mit gereinigtem Öl gefüllt und abgekoppelt.

Es ist weiterhin möglich, an dem Kreislaufsystem mehrere solcher Koppelstellen (Ventile I1, I2, H) vorzusehen. Damit können gleichzeitig mehrere Geräte LRU von dem Öl in der beschriebenen Weise durchströmt, gereinigt und anschließend gefüllt werden.

Das Verfahren sowie die Anordnung wird gesteuert und/oder geregelt mit Hilfe mindestens einem Druckmesser 9 und mindestens einem Temperaturfühler (Thermometer)7. Das Überdruckventil Ü2 begrenzt den Öl-Druck in dem Kreislaufsystem auf einen einstellbaren und vorgebbaren Wert, der z.B. gleich dem in dem Gerät LRU maximal zulässigen Wert gewählt wird. Die weiterhin dargestellten Ventile E, F, K bis M, S, T dienen lediglich der Wartung und/oder Prüfung der an die Ventile angeschlossenen Bauteile, z.B. der Filter 5, 6, des Durchschlagprüfgerätes 12 sowie des Abscheiders AB.

Die Erfindung ist nicht auf die beschriebenen Ausführungsbeispiele beschränkt, sondern sinngemäß auf weitere anwendbar. Beispielsweise ist es möglich, alternativ zu dem erwähnten Siliconöl auch ein anderes Öl, z.B. ein sogenanntes Transformatorenöl oder auch eine Flüssigkeit, welche dem Siliconöl ähnliche Eigenschaften besitzt, zu verwenden. In diesem Fall müßte gegebenenfalls lediglich die Temperatur des umgewälzten Öls oder der Flüssigkeit an die zulässigen Eigenschaften des Transformatorenöls oder der Flüssigkeit angepaßt werden.

Weiterhin ist es beispielsweise möglich, im dem Vorratstank 14 oberhalb der Anordnung 16 zusätzlich ein Verteilsystem für das umgewälzte Öl oder die Flüssigkeit anzubringen. Durch das Verteilsystem soll erreicht werden, daß das Öl oder die Flüssigkeit möglichst gleichmäßig über die beispielhaft erwähnten Raschig-Ringe verteilt wird. Ein solches Verteilsystem besteht beispielsweise aus einem Blech, das als Kegel oder Kegelstumpf ausgebildet ist, wobei beispielsweise ein Kegelwinkel größer 90° vorhanden ist. Der Kegel oder Kegelstumpf hat einen größten Durchmesser, der nahezu demjenigen des Vorratstanks 14 entspricht. In dem Mantel des Kegels oder Kegelstumpfs befinden sich in vorgebbaren Abständen sogenannte Sicken, in denen sich jeweils mindestens eine Bohrung mit einem nach unten gerichteten Tropfrand befindet. Auf die Spitze des Kegels oder Kegelstumpfes geleitetes Öl (oder Flüssigkeit) fließt den Mantel hinab, tropft durch die Bohrungen und verteilt sich dadurch im wesentlichen gleichmäßig über den Raschig-Ringen.

Altenativ dazu ist es möglich, das Verteilsystem als Zerstäubungseinrichtung auszubilden. Dieses besteht z. B. aus einem sich oberhalb der Raschig-Ringe horizontal drehenden Rohr, dessen Länge im wesentlichen dem Durchmesser des Vorratstanks 14 entspricht. In und/oder an dem Rohr befinden sich im wesentlichen nach unten gerichtete Zerstäubungsdüsen, durch die eine im wesentlichen gleichmäßige Verteilung des Öls oder der Flüssigkeit erreicht wird.

## Patentansprüche

1. Verfahren zur Reinigung von Öl, das insbesondere zur Kühlung und elektrischen Isolation in einem Hochspannungsgerät verwendbar ist, dadurch gekennzeichnet,
- daß zu reinigendes Öl umgewälzt wird in einem geschlossenen Kreislaufsystem zumindest bestehend aus einem heiz- und evakuierbarem Vorratstank (14), einem Durchschlagprüfgerät (12), einer Durchlaufheizung (8), einem Filter (5, 6), einer Dosierpumpe (13) und einem beheizbaren Ofen (11), in den ein mit dem Öl zu befüllendes Gerät (LRU) eingeschoben und an das Kreislaufsystem angeschlossen wird,
- daß das zu reinigende Öl durch die Durchlaufheizung (8) auf eine vorgebbare erste Temperatur aufgeheizt wird,
- daß während der Umwälzung durch die Dosierpumpe (13) das Öl fortlaufend filtriert und entgast wird durch eine an das Kreislaufsystem angeschlossene Vakuumanordnung (4),
- daß das Gerät (LRU) durch den Ofen (11) auf eine vorgebbare zweite Temperatur aufgeheizt und durch die angeschlossene Vakuumanordnung (4) entgast wird,
- daß das Gerät (LRU) nach der Entgasung durch das im Kreislaufsystem umlaufende Öl gespült wird,
- daß während der Umwälzung des Öls in vorgebbaren Zeitabständen in dem Durchschlagprüfgerät (12) die elektrische Durchschlagfestigkeit des Öls gemessen wird,
- daß die Umwälzung, Filtrierung, Entgasung und Messung der elektrischen Durchschlagfestigkeit fortgesetzt wird solange bis die Durchschlagfestigkeit einen vorgebbaren Schwellwert übersteigt und
- daß anschließend das Gerät (LRU) mit dem gereinigten Öl gasfrei gefüllt und verschlossen wird.

2. Verfahren nach Anspruch 1, dadurch gekennzeichnet, daß während der Umwälzung das Öl über eine Anordnung (16) mit einer großen Oberfläche geleitet und daß daran die Vakuumanordnung (4) zur Entgasung des Öls angeschlossen wird.

3. Verfahren nach Anspruch 1 oder Anspruch 2, dadurch gekennzeichnet, daß in Abhängigkeit von dem Wassergehalt des Öls vor dessen Entgasung zunächst ein feuchtigkeitsarmes inertes Gas (N₂) durch das im Vorratstank (14) befindliche Öl geleitet und durch die Vakuumanordnung (4) abgepumpt wird solange bis der Wassergehalt des Öls einen vorgebaren Schwellwert unterschreitet.

4. Verfahren nach einem der vorhergehenden Ansprüche, dadurch gekennzeichnet, daß als inertes Gas molekularer Stickstoff (N₂) oder molekularer Wasserstoff (H₂) oder ein Edelgas oder ein Gemisch der genannten Gase verwendet wird.

5. Verfahren nach einem der vorhergehenden Ansprüche, dadurch gekennzeichnet, daß als Öl ein Siliconöl oder auch eine mit ähnlichen Eigenschaften geartete Flüssigkeit verwendet wird.

6. Anordnung zur Reinigung von Öl, das insbesondere zur Kühlung und elektrischen Isolation in einem Hochspannungsgerät verwendbar ist, dadurch gekennzeichnet, daß das zu reinigende Öl umläuft in einem geschlossenen Kreislaufsystem, das zumindest besteht aus
- einem senkrecht stehendem geschlossenen Vorratstank (14), der in seinem Bodenbereich mindestens einem Heizkörper (17) sowie einen absperrbaren Anschluß zur Entnahme des Öls besitzt, der in einem Bereich oberhalb der maximalen Füllhöhe eine Anordnung (16) mit einer großen von dem Öl uberströmten Oberfläche enthält und der an der Anordnung (16) einen absperrbaren Anschluß für eine Vakuumanordnung (4) sowie einen absperrbaren Anschluß für einen Ölvorratsbehälter (1) besitzt,
- einer Dosierpumpe (13) zur Umwälzung des Öls in dem Kreislaufsystem,
- einem Durchschlagprüfgerät (12) zur Messung der elektrischen Durchschlagfestigkeit des in dem Kreislaufsystem umlaufenden Öls,
- einem absperrbaren Anschluß zum Anschließen eines mit dem Öl zu füllenden Gerätes (LRU), das in einem auf eine vorgebbare Temperatur heizbaren Ofen (11) angeordnet ist,
- einer Durchlaufheizung (8) zur Heizung des Öls auf eine vorgebbare Temperatur und
- mindestens einem Filter (5, 6) zur Ausfilterung der in dem Öl enthaltenen Veunreinigungen.

7. Anordnung nach Anspruch 6, dadurch gekennzeichnet, daß der Vorratstank (14) aus mindestens zwei Vorratsbehältern besteht, deren Befüllung mit Hilfe einer Schaltvorrichtung (18) erfolgt.

8. Anordnung nach Anspruch 6 oder Anspruch 7, dadurch gekennzeichnet, daß Schaltvorrichtung (18) als Schaltwippe ausgebildet ist.

9. Anordnung nach einem der Ansprüche 6 bis 8, dadurch gekennzeichnet, daß in dem Boden des Vorratstanks (14) ein absperrbarer Anschluß zum Anschließen mindestens einer Gasversorgungseinheit (15) vorhanden ist.

10. Anordnung nach einem der Ansprüche 6 bis 9, dadurch gekennzeichnet, daß die Anordnung (16) zur Vergrößerung ihrer Oberfläche mehrere torusförmige Körper enthält.

11. Anordnung nach einem der Ansprüche 6 bis 10, dadurch gekennzeichnet, daß mindestens eines der Filter (5, 6) als Aktivkohlefilter ausgebildet ist.

12. Anordnung nach einem der Ansprüche 6 bis 11, dadurch gekennzeichnet, daß das Gerät (LRU) als Hochspannungsgerät für eine Radaranlage ausgebildet ist.
